(19) Europäisches Patentamt
European Patent Office
Office européen des brevets

(11) EP 2 442 665 B1

(12) EUROPEAN PATENT SPECIFICATION

(45) Date of publication and mention
of the grant of the patent:
**27.03.2013 Bulletin 2013/13**

(51) Int Cl.:
*A23D 7/005* (2006.01)

(21) Application number: **10725410.4**

(22) Date of filing: **08.06.2010**

(86) International application number:
**PCT/EP2010/057957**

(87) International publication number:
**WO 2010/145966 (23.12.2010 Gazette 2010/51)**

(54) **WATER-IN-OIL EMULSION WITH IMPROVED SPATTERING BEHAVIOUR**

WASSER-IN-ÖL-EMULSION MIT VERBESSERTEM SPRITZVERHALTEN

ÉMULSION D'EAU DANS L'HUILE AYANT UN COMPORTEMENT DE MOUCHETAGE AMÉLIORÉ

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.06.2009 EP 09163044**

(43) Date of publication of application:
**25.04.2012 Bulletin 2012/17**

(73) Proprietors:
• **Unilever PLC
London
Greater London EC4Y 0DY (GB)**
Designated Contracting States:
**CY GB IE MT**
• **Unilever NV
3013 AL Rotterdam (NL)**
Designated Contracting States:
**AL AT BE BG CH CZ DE DK EE ES FI FR GR HR
HU IS IT LI LT LU LV MC MK NL NO PL PT RO SE
SI SK SM TR**

(72) Inventors:
• **ALDRED, Deborah, Lynne
Bedford
Bedfordshire MK44 1LQ (GB)**
• **BOT, Arjen
NL-3133 AT Vlaardingen (NL)**

(74) Representative: **Hugot, Alain
Unilever Patent Group
Colworth House
Sharnbrook
Bedford, MK44 1LQ (GB)**

(56) References cited:
EP-A1- 2 052 628          WO-A1-01/35756
WO-A1-2005/058067          US-A- 4 325 980
US-A- 5 397 592          US-A1- 2002 155 208
US-A1- 2009 136 433

## Description

### TECHNICAL FIELD

The invention relates to water-in-oil emulsion food products, in particular spreads and liquid margarines, showing improved spattering behaviour when used for shallow frying.

### BACKGROUND AND PRIOR ART

The use of water-in-oil emulsions for frying often is accompanied by spattering. Usually a distinction is made between primary spattering and secondary spattering. Primary spattering occurs when a frying product is an emulsion phase conatining a dispersed aqueous phase. When heating the emulsion to a temperature over 100°C the dispersed water will evaporate under more or less spattering.

With secondary spattering is denoted spattering which occurs when water or a water containing food product such as meat is brought into a heated frying emulsion.

The present invention is related particularly to a method for improving both primary and secondary spattering behaviours. Primary and secondary spattering behaviours are measured by determining the spattering values SV1 and SV2 according to a protocol as specified in the examples section.

Common anti-spattering agents for water-in-oil emulsions comprise emulsifiers in a broad sense e.g. lecithin, hydrolysed lecithin, esters of citric acid (Citrem™) and cooking salt. The effect of sole lecithin on spattering is small. When lecithin is used in combination with cooking salt, well performing cooking emulsions having SV2 values up to 8 can be achieved. Lecithin, however, has the disadvantage that it may decompose at high frying temperatures and causes bad smell, discoloration and foaming. The cooking salt (specifically sodium chloride) is not recommended from a nutritional point of view, but has to be added in a substantial amount, exceeding 0.3 wt.% to get good spattering behaviour.

For improving spattering behaviour EP 477825 and EP 771531 disclose the use of citric acid esters as synthetic antioxidants.

US 3,946,122 and US 5,436,021 disclose water and oil emulsions comprising a citric acid ester of a mono- or diglyceride of fatty acids.

WO 01/84945 uses a citric ester of a partial fatty acid glyceride which results in SV2 values of at least 4.

EP 775444 discloses a pourable emulsion composition comprising herbs, spices, nuts or seeds and 1-10 wt% salt.

WO 03/051136 discloses a transparent oil which contains stably dispersed particles which may have a vegetable origin.

A relatively high salt content is typical for most prior art cooking oils which show an improved spattering behaviour. The presently available alternatives for lecithin and cooking salt consist of non-natural substances.

H. Pardun, in Fette,Seifen, Anstrichmittel 79(5), 1977, pp. 195-203 describes the use of milled soy protein concentrates as antispattering agents in margarines. The antispattering agents proposed by Pardun have the disadvantage that when heated in the pan during shallow frying, they may decompose and give char formation. Moreover, we have found that when margarines of Pardun are prepared using modern margarine equipment, such as a votator, the antispattering agents are no longer effective.

### TESTS AND DEFINITIONS

Determination of spattering value in a spattering test

Primary spattering (SV1) was assessed under standardised conditions in which an aliquot of a food product was heated in a glass dish and the amount of fat spattered onto a sheet of paper held above the dish was assessed after the water content of the food product had been evaporated by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value, 25 g food product was heated in a 15 cm diameter glass bowl on an electric plate to about 205 °C. The fat that spattered out by force of expanding evaporating water droplets was caught on a sheet of paper situated at 25 cm above the pan (SV1 test). Subsequently a quantity of 10 ml water was poured into the bowl and again the fat that spattered out of by force of expanding evaporating water droplets was caught on a sheet of paper situated above the pan (SV2 test).

The images obtained were compared with a set of standard pictures number 0-10 whereby the number of the best resembling picture was recorded as the spattering value. 10 indicates no spattering and zero indicates very bad spattering. The general indication is as follows in table 1.

Table 1: Scoring table for spattering value

| Score | Comments |
| --- | --- |
| 10 | Excellent |
| 8 | Good |
| 6 | Passable |
| 4 | Unsatisfactory for SV1, almost passable for SV2 |
| 2 | Very poor |

Typical results for household margarines (80 wt.% fat) are 8.5 for primary spattering (SV1) and 4.6 for secondary spattering (SV2) under the conditions of the above mentioned test.

Water in oil food products

Butter, water-in-oil emulsion spreads or water-in-oil emulsion liquid margarines may hereinafter collectively be referred to as water-in-oil emulsion food products.

All weight percentages (wt.%) herein are calculated based on total weight of the food product, unless otherwise indicated.

A water-in-oil emulsion food product is herein understood to contain more than 0.1 wt. %, preferably more than 1 wt. %, more preferably more than 5 wt.% of a water phase. Even more preferably the water-in-oil emulsion food product comprises 15 wt.% or more and most preferably 25 wt.% or more water phase.

The water-in-oil emulsion food product may comprise any conventional ingredients in the oil phase and in the water phase. The water-in-oil emulsion food product may be any conventional format, and includes products that are packed in a wrapper, products that are suitable for packing in a tub and liquid products that may be packaged in a (squeezable) bottle.

In case the water-in-oil emulsion food product is a liquid frying product or margarine, the oil phase of the water-in-oil emulsion food products optionally comprises an emulsion structuring component which imparts stability to the final product. Hydrogenated high erucic rapeseed oil is a well known most preferred emulsion structuring component which keeps powder particles and aqueous phase droplets stably dispersed. Other suitable emulsion structuring components comprise hydrogenated fish oil, hydrogenated ground nut oil, hydrogenated sunflower oil and mixtures thereof. The amount of emulsion structuring component suitably is between 0.15 wt.% and 2 wt.%.

Optionally, the water-in-oil emulsion food product comprises other ingredients such as lecithin or another emulsifying substance, colouring agent, flavour components or salt. Lecithin and salt are common anti-spattering agents. In the present invention they are redundant, but nevertheless they may be present for other reasons, the lecithin for its desired browning and foaming effect and the salt for imparting taste (preferably less than 1.5 wt.% salt, more preferably less than 1.0 wt.%, even more preferably less than 0.5 wt.%).

Preferably the emulsion resulting from the present invention is substantially free from cooking salt.

The water-in-oil emulsion food products resulting from the invention shows such improved spattering behaviour that its SV1 value is at least 8 and its SV2 value at least 6, preferably SV1 is at least 9 and SV2 at least 8, more preferably SV1 is at least 9 and SV2 at least 9.

The food products may be all kinds of food products, for instance marinades, sauces, seasonings, batter, spray products, spreads, liquid shallow frying products and/or seasonings.

Preferably, food products according to the invention are spreads, margarines (water in oil emulsions), and dairy products such as butter. For example margarines may be prepared by using a votator process.

Hydrophobins

Hydrophobins are a well-defined class of proteins (Wessels, 1997, Adv. Microb. Physio. 38: 1-45; Wosten, 2001, Annu Rev. Microbiol. 55: 625-646) capable of self-assembly at a hydrophobic/hydrophilic interface, and having a conserved sequence:

Xn-C-X5-9-C-C-X11-39-C-X8-23-C-X5-9-C-C-X6-18-C-Xm (SEQ ID No. 1)

where X represents any amino acid, and n and m independently represent an integer. Typically, a hydrophobin has a length of up to 125 amino acids. The cysteine residues (C) in the conserved sequence are part of disulphide bridges. In the context of the present invention, the term hydrophobin has a wider meaning to include functionally equivalent proteins still displaying the characteristic of self-assembly at a hydrophobic-hydrophilic interface resulting in a protein film, such as proteins comprising the sequence:

Xn-C-X1-50-C-X0-5-C-X1-100-C-X1-100-C-X1-50-C-X0-5-C-X1-50-C-Xm (SEQ ID No. 2)

or parts thereof still displaying the characteristic of self-assembly at a hydrophobic-hydrophilic interface resulting in a protein film. In accordance with the definition of the present invention, self-assembly can be detected by adsorbing the protein to Teflon and using Circular Dichroism to establish the presence of a secondary structure (in general, $\alpha$-helix) (De Vocht et al., 1998, Biophys. J. 74: 2059-68).

The formation of a film can be established by incubating a Teflon sheet in the protein solution followed by at least three washes with water or buffer (Wosten et al., 1994, Embo. J. 13: 5848-54). The protein film can be visualised by any suitable method, such as labeling with a fluorescent marker or by the use of fluorescent antibodies, as is well established in the art. m and n typically have values ranging from 0 to 2000, but more usually m and n in total are less than 100 or 200. The definition of hydrophobin in the context of the present invention includes fusion proteins of a hydrophobin and another polypeptide as well as conjugates of hydrophobin and other molecules such as polysaccharides.

Hydrophobins identified to date are generally classed as either class I or class II. Both types have been identified in fungi as secreted proteins that self-assemble at hydrophobilic interfaces into amphipathic films. Assemblages of class I hydrophobins are relatively insoluble whereas those of class II hydrophobins readily dissolve in a variety of solvents.

Hydrophobin-like proteins have also been identified in filamentous bacteria, such as Actinomycete and Steptomyces sp. (WO01/74864). These bacterial proteins, by contrast to fungal hydrophobins, form only up to one disulphide bridge since they have only two cysteine residues. Such proteins are an example of functional equivalents to hydrophobins having the consensus sequences shown in SEQ ID Nos. 1 and 2, and are within the scope of the present invention.

The hydrophobins can be obtained by extraction from native sources, such as filamentous fungi, by any suitable process. For example, hydrophobins can be obtained by culturing filamentous fungi that secrete the hydrophobin into the growth medium or by extraction from fungal mycelia with 60% ethanol. It is particularly preferred to isolate hydrophobins from host organisms that naturally secrete hydrophobins. Preferred hosts are hyphomycetes (e.g. Trichoderma), basidiomycetes and ascomycetes. Particularly preferred hosts are food grade organisms, such as Cryphonectria parasitica which secretes a hydrophobin termed cryparin (MacCabe and Van Alfen, 1999, App. Environ. Microbiol 65: 5431-5435).

Alternatively, hydrophobins can be obtained by the use of recombinant technology. For example host cells, typically micro-organisms, may be modified to express hydrophobins and the hydrophobins can then be isolated and used in accordance with the present invention. Techniques for introducing nucleic acid constructs encoding hydrophobins into host cells are well known in the art. More than 34 genes coding for hydrophobins have been cloned, from over 16 fungal species (see for example WO96/41882 which gives the sequence of hydrophobins identified in Agaricus bisporus; and Wosten, 2001, Annu Rev. Microbiol. 55: 625-646). Recombinant technology can also be used to modify hydrophobin sequences or synthesise novel hydrophobins having desired/improved properties.

Typically, an appropriate host cell or organism is transformed by a nucleic acid construct that encodes the desired hydrophobin. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - generally regarded as safe' (GRAS).

Suitable fungal species, include yeasts such as (but not limited to) those of the genera Saccharomyces, Kluyveromyces, Pichia, Hansenula, Candida, Schizo saccharomyces and the like, and filamentous species such as (but not limited to) those of the genera Aspergillus, Trichoderma, Mucor, Neurospora, Fusarium and the like.

The sequences encoding the hydrophobins are preferably at least 80% identical at the amino acid level to a hydrophobin identified in nature, more preferably at least 95% or 100% identical. However, persons skilled in the art may make conservative substitutions or other amino acid changes that do not reduce the biological activity of the hydrophobin. For the purpose of the invention these hydrophobins possessing this high level of identity to a hydrophobin that naturally occurs are also embraced within the term "hydrophobins".

Hydrophobins can be purified from culture media or cellular extracts by, for example, the procedure described in WO01/57076 which involves adsorbing the hydrophobin present in a hydrophobin-containing solution to surface and then contacting the surface with a surfactant, such as Tween 20, to elute the hydrophobin from the surface. See also Collen et al., 2002, Biochim Biophys Acta. 1569: 139-50; Calonje et al., 2002, Can. J. Microbiol. 48: 1030-4; Askolin et al., 2001, Appl Microbiol Biotechnol. 57: 124-30; and De Vries et al., 1999, Eur J Biochem. 262: 377-85.

Oil

As used herein the term "oil" is used as a generic term for lipids and fats either pure or containing compounds in solution. Oils can also contain particles in suspension.

Lipids

As used herein the term "lipids" is used as a generic term for long chain fatty acids or long chain alcohols wherein the term "long chain" is used as a generic term for 12 carbon atoms or more.

Fats

As used herein the term "fats" is used as a generic term for compounds containing more than 80% triglycerides. They can also contain diglycerides, monoglycerides and free fatty acids. In common language, liquid fats are often referred to as oils but herein the term fats is also used as a generic term for such liquid fats. Fats include: plant oils (for example: Apricot Kernel Oil, Arachis Oil, Arnica Oil, Argan Oil, Avocado Oil, Babassu Oil, Baobab Oil, Black Seed Oil, Blackberry Seed Oil, Blackcurrant Seed Oil, Blueberry Seed Oil, Borage Oil, Calendula Oil, Camelina Oil, Camellia Seed Oil, Castor Oil, Cherry Kernel Oil, Cocoa Butter, Coconut Oil, Corn Oil, Cottonseed Oil, Evening Primrose Oil, Grapefruit Oil, Grapeseed Oil, Hazelnut Oil, Hempseed Oil, Jojoba Oil, Lemon Seed Oil, Lime Seed Oil, Linseed Oil, Kukui Nut Oil, Macadamia Oil, Maize Oil, Mango Butter, Meadowfoam Oil, Melon Seed Oil, Moringa Oil, Olive Oil, Orange Seed Oil, Palm Oil, Papaya Seed Oil, Passion Seed Oil, Peach Kernel Oil, Plum Oil, Pomegranate Seed Oil, Poppy Seed Oil, Pumpkins Seed Oil, Rapeseed (or Canola) Oil, Red Raspberry Seed Oil, Rice Bran Oil, Rosehip Oil, Safflower Oil, Seabuckthorn Oil, Sesame Oil, Soyabean Oil, Strawberry Seed Oil, Sunflower Oil, Sweet Almond Oil, Walnut Oil, Wheat Germ Oil); fish oils (for example: Sardine Oil, Mackerel Oil, Herring Oil, Cod-liver Oil, Oyster Oil); animal oils (for example: butter or Conjugated Linoleic Acid); or any mixture or fraction thereof.

Aeration

The term "aerated" means that gas has been intentionally incorporated into the product, such as by mechanical means. The gas can be any gas, but is preferably, particularly in the context of food products, a food-grade gas such as air, nitrogen or carbon dioxide. The extent of aeration is typically defined in terms of "overrun". In the context of the present invention, overrun (in percent) is defined in volume terms as:

$$\text{Overrun} = \left((\text{volume of the final aerated product} - \text{volume of the mix}) / \text{volume of the mix}\right) \times 100$$

**SUMMARY OF THE INVENTION**

It is therefore an object of the invention to provide a water-in-oil emulsion food product having a good spattering performance in shallow frying. It is another object to provide healthy water-in-oil emulsion spreads or liquid margarines, in particular having a low amount of salt. A further object is to provide a water-in-oil emulsion food product having a lower fat content, e.g. around 60 wt.% fat, or even lower, while maintaining good spattering performance. Still one more object is to provide such food products which avoid char formation during shallow frying.

Still one more object of the invention is to provide an oil in water emulsion food product which allows the formation of a stable foam when water is added while cooking , e.g. to make a sauce, therefore not only reducing secondary spattering but also creating a unique food product. One or more of this objects are attained according to the invention which provides a water in oil food product with an overrun of less than 15% which comprises 0.01% to 1% w/w of hydrophobin.

Preferably also the water in oil emulsion food product contains less than 0.5% w/w hydrophobin, more preferably less than 0.1 % w/w, even more preferably less than 0.025% w/w.

Preferably also the hydrophobin is a class II hydrophobin, more preferably HFB II.

The overrun of the water in oil emulsion food product is preferably less than 10%, more preferably less than 5%.

**DETAILS OF THE INVENTION**

The following examples illustrate the invention.

Example 1. Shallow frying behaviour of margarines and butter with HFBII

Material and Methods

Table 1. Materials used

| Ingredient | Supplier |
|---|---|
| Liquid Margarine (80% fat) | Unilever NV |
| Flora Buttery (70% fat) | Unilever UK |
| Flora Light (38% fat) | Unilever UK |
| Butter (82% fat) | Campina, The Netherlands |
| Hydrophobin (HFBII from *Trichoderma reesei*) | VTT, Finland |

Two margarines, one liquid and one solid, one low fat spread and butter were analysed for their cooking test performance at high temperatures.

Hydrophobin, in an aqueous solution, was incorporated into the products to give hydrophobin levels of 0.01% and 0.1%, a level of 0.025% was also measured for the liquid product. This incorporation was done by equilibrating the solid spreads and the butter to room temperature so that they were soft enough to allow a small amount of hydrophobin containing solution to be mixed into the product. The samples were then placed back into the fridge at 5°C to allow them to harden.

For the liquid margarine the hydrophobin solution was easily incorporated into the already liquid matrix, but this was done just prior to the test in order that the hydrophobin was evenly distributed throughout the sample.

These samples were then evaluated for their spattering performance using the standard method described above.

Results

When the products were melted a certain amount of foaming occurs, both in the control and in those containing hydrophobin, as the water phase heats and is driven off as steam. In the control samples this caused greater amounts of spattering. However, when hydrophobin was present the release of this steam was more controlled and hence less explosive. It was also noticed that the noise (sizzling) associated with the frying process was lower in the hydrophobin containing systems compared to the control, again indicating a more controlled.

It can be seen that the spattering performance (see table 2) is improved as the hydrophobin level was increased, however even at 0.01% significant improvements in all samples were noticed both at SV1 and SV2. For example, the low fat control had an SV1 of 7 and an SV2 of 6, the addition of hydrophobin at 0.01% improved this to SV1 9 and SV2 of 7, whilst in the 70% fat product the improvement was even more dramatic with Sv1 improving from 5.5 to 9 and SV2 from 5 to 6.

These improvements in SV2 show that the hydrophobin is not deactivated by the high temperatures and is still able to actively control the release of the extra water added as part of the SV2 measurement.

Table 2. Spattering Values

| Sample | SV1 | SV2 |
|---|---|---|
| Liquid Margarine Control | 8.5 | 6.5 |
| Liquid Margarine + HFBII 0.01% | 10 | 6.5 |
| Liquid Margarine + HFBII 0.025% | 10 | 8 |
| Liquid Margarine + HFBII 0.1% | 10 | 7.5 |
| Flora Buttery Control | 5.5 | 5 |

(continued)

| Sample | SV1 | SV2 |
|---|---|---|
| Flora Buttery + 0.01% HFBII | 9 | 6 |
| Flora Buttery + 0.1% HFBII | 10 | 7 |
| Flora Light Control | 7 | 6 |
| Flora Light + 0.01% HFBII | 9 | 7 |
| Flora Light + 0.1% HFBII | 10 | 9 |
| Butter Control | 7 | 4 |
| Butter + 0.01% HFBII | 7.5 | 6 |
| Butter + 0.1% HFBII | 10 | 7.5 |

The action of the hydrophobin is evident not only by the sound of the frying but also in the foaming. All spreads foam on melting but when the hydrophobin was present the bubbles were larger and a skin could be seen which stretched, broke and reformed through the process, which allowed the steam to be released in a more controlled manner.

These results show that the addition of hydrophobin improved the spattering performance of both high and low fat products.

Example 2: Shallow frying experiment of Blue Band Culinesse

| Sample | SV1 | SV2 |
|---|---|---|
| Culinesse | 8.25 | 6.25 |
| Culinesse + 0.025% HFB I | 10 | 8.5 |
| Culinesse + 0.25% HFB II | 10 | 9.5 |
| Culinesse + 1.0% HFB II | 10 | 10 |
| Culinesse: Blue Band Culinesse , The Netherlands | | |

These experiments show that HFB I work as well as HFB II.

## Claims

1. Water-in-oil emulsion food product with an overrun of less than 15% containing 0.01 to 1% w/w hydrophobin.

2. Water-in-oil emulsion food product according to claim 1 containing over 0.1 % w/w hydrophobin.

3. Water in oil emulsion food product according to claim 1 or 2 containing less than 0.5% w/w hydrophobin.

4. Water in oil emulsion food product according to any preceding claim wherein the hydrophobin is a class II hydrophobin

5. Water in oil emulsion food product according to claim 4 wherein the hydrophobin is HFB II.

6. Water in oil emulsion food product according to any preceding claim wherein the overrun is less than 10%.

## Patentansprüche

1. Nahrungsmittelprodukt in Form einer Wasser-in-Öl-Emulsion mit einem Überlauf von weniger als 15 %, die 0,01 bis 1 Gew.-% Hydrophobin enthält.

**2.** Nahrungsmittelprodukt in Form einer Wasser-in-Öl-Emulsion nach Anspruch 1, die mehr als 0,1 Gew.-% Hydrophobin enthält.

**3.** Nahrungsmittelprodukt in Form einer Wasser-in-Öl-Emulsion nach Anspruch 1 oder 2, die weniger als 0,5 Gew.-% Hydrophobin enthält.

**4.** Nahrungsmittelprodukt in Form einer Wasser-in-Öl-Emulsion nach einem der vorstehenden Ansprüche, wobei das Hydrophobin Hydrophobin der Klasse II ist.

**5.** Nahrungsmittelprodukt in Form einer Wasser-in-Öl-Emulsion nach Anspruch 4, wobei das Hydrophobin HFB II ist.

**6.** Nahrungsmittelprodukt in Form einer Wasser-in-Öl-Emulsion nach einem der vorstehenden Ansprüche, wobei der Überlauf weniger als 10 % beträgt.


**Revendications**

**1.** Produit alimentaire sous forme d'une émulsion eau dans l'huile présentant un foisonnement inférieur à 15 % et contenant de 0,01 à 1 % p/p d'hydrophobine.

**2.** Produit alimentaire sous forme d'une émulsion eau dans l'huile selon la revendication 1 contenant plus de 0,01 % p/p d'hydrophobine.

**3.** Produit alimentaire sous forme d'une émulsion eau dans l'huile selon la revendication 1 ou 2 contenant moins de 0,5 % p/p d'hydrophobine.

**4.** Produit alimentaire sous forme d'une émulsion eau dans l'huile selon l'une quelconque des revendications précédentes dans lequel l'hydrophobine est une hydrophobine de classe II.

**5.** Produit alimentaire sous forme d'une émulsion eau dans l'huile selon la revendication 4 dans lequel l'hydrophobine est de l'HFB II.

**6.** Produit alimentaire sous forme d'une émulsion eau dans l'huile selon l'une quelconque des revendications précédentes dans lequel le foisonnement est inférieur à 10 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 477825 A
- EP 771531 A
- US 3946122 A
- US 5436021 A
- WO 0184945 A
- EP 775444 A
- WO 03051136 A
- WO 0174864 A
- WO 9641882 A
- WO 0157076 A

### Non-patent literature cited in the description

- **H. PARDUN.** *Fette,Seifen, Anstrichmittel,* 1977, vol. 79 (5), 195-203
- **WESSELS.** *Adv. Microb. Physio.,* 1997, vol. 38, 1-45
- **WOSTEN.** *Annu Rev. Microbiol.,* 2001, vol. 55, 625-646
- **DE VOCHT et al.** *Biophys. J.,* 1998, vol. 74, 2059-68
- **WOSTEN et al.** *Embo. J.,* 1994, vol. 13, 5848-54
- **MACCABE ; VAN ALFEN.** *App. Environ. Microbiol,* 1999, vol. 65, 5431-5435
- **COLLEN et al.** *Biochim Biophys Acta,* 2002, vol. 1569, 139-50
- **CALONJE et al.** *Can. J. Microbiol.,* 2002, vol. 48, 1030-4
- **ASKOLIN et al.** *Appl Microbiol Biotechnol.,* 2001, vol. 57, 124-30
- **DE VRIES et al.** *Eur J Biochem.,* 1999, vol. 262, 377-85